# EUROPÄISCHE PATENTSCHRIFT

(11) **EP 4 077 469 B1**
(45) Veröffentlichungstag und Bekanntmachung des Hinweises auf die Patenterteilung: **16.08.2023**
(21) Anmeldenummer: 20823825.3
(22) Anmeldetag: 15.12.2020
(51) Int. Cl.: C08G 63/64, C08G 63/78, C08G 63/83, C08G 63/87

(54) **VERFAHREN ZUR HERSTELLUNG EINES POLYESTERCARBONATS**
METHOD FOR PRODUCING A POLYESTER CARBONATE
PROCÉDÉ DE FABRICATION D'UN CARBONATE DE POLYESTER

(30) Priorität: 16.12.2019 EP 19216474
(43) Veröffentlichungstag der Anmeldung: 26.10.2022
(73) Patentinhaber: Covestro Intellectual Property GmbH & Co. KG, 51373 Leverkusen (DE)
(72) Erfinder: HEIJL, Jan, 9160 Lokeren (BE); BERTIN, Annabelle, 2020 Antwerpen (BE); MEYER, Alexander, 40489 Düsseldorf (DE); HEUER, Helmut, Werner, 57074 Siegen (DE)
(74) Vertreter: Levpat
(86) Internationale Anmeldenummer: PCT/EP2020/086088
(87) Internationale Veröffentlichungsnummer: WO 2021/122509

(56) Entgegenhaltungen:
- EP-A1- 3 248 999
- WO-A1-02/10111
- WO-A1-2019/147051
- OKADA M ET AL: "Biodegradable polymers based on renewable resources. VI. Synthesis and biodegradability of poly(ester carbonate)s containing 1,4:3,6-dianhydro-D-glucitol and sebacic acid units", JOURNAL OF APPLIED POLYMER SCIENCE, JOHN WILEY & SONS, INC, US, Bd. 86, Nr. 4, 1. Januar 2002 (2002-01-01) , Seiten 872-880, XP002582390, ISSN: 0021-8995

## Beschreibung

Die vorliegende Erfindung betrifft ein Verfahren zur Herstellung eines Polyestercarbonats, das nach dem Verfahren hergestellte Polyestercarbonat selbst, eine Formmasse enthaltend das Polyestercarbonat und Formkörper enthaltend das Polyestercarbonat.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate vereinen in Abhängigkeit der gewählten Monomere Eigenschaftsprofile aus beiden genannten Gruppen.

Aromatische Polycarbonate oder Polyester weisen zwar häufig ein gutes Eigenschaftsprofil auf, zeigen jedoch bzgl. der Alterungs- und Bewitterungsbeständigkeit Schwächen. So kommt es beispielsweise durch Absorption von UV-Licht zur Vergilbung und ggf. Versprödung dieser thermoplastischen Materialien. Aliphatische Polycarbonate und Polyestercarbonate weisen diesbezüglich bessere Eigenschaften, insbesondere bessere Alterungs- und/oder Bewitterungsbeständigkeiten sowie bessere optische Eigenschaften wie beispielsweise Transmission auf.

Der Nachteil aliphatischer Polycarbonate oder Polyestercarbonate ist häufig deren geringe Glastemperatur. Deshalb ist es von Vorteil cycloaliphatische Alkohole als (Co)Monomere einzusetzen. Derartige cycloaliphatische Alkohole sind beispielsweise TCD-Alkohol (Tricyclodecandimethanol), Cyclohexandiol, Cyclohexandimethanol und biobasierte Diole auf Basis von 1,4:3,6-Dianhydrohexitolen wie Isosorbid und den Isomeren Isomannid und Iosidid. Um die Glastemperatur weiter zu erhöhen, können auch cycloaliphatische Säuren wie 1,2-, 1,3- oder 1,4-Cyclohexandicarbonsäuren als (Co)Monomere eingesetzt werden. Man erhält dann je nach Wahl der Reaktanden Polyester oder Polyestercarbonate. Die Polyester von Cyclohexandicarbonsäure und Isosorbid sind von Oh et al. in Macromolecules 2013, 46, 2930-2940 beschrieben. Die vorliegende Erfindung ist jedoch auf Polyestercarbonate ausgerichtet.

Polyestercarbonate werden großtechnisch beispielsweise durch Umesterung entsprechender Ester-haltiger Monomere mit Diolen hergestellt. So wird der Polyester aus 1,4-Cylohexandimethanol und 1,4-Cyclohecxandicarbonsäure ausgehend vom Dimethylester der Disäure hergestellt (Blend aus diesem Polyester und Polycarbonat: Xyrex^{®} der DuPont).

Für die Umesterungsreaktion sind Phenylester aber deutlich reaktiver als ihre aliphatischen Analoga. In EP 3026074 A1 und in EP 3248999 A1 werden Verfahren zur Herstellung von Polyestercarbonaten mit Phenylester als Zwischenschritt beschrieben.

In EP 3026074 A1 wird in Beispiel 1 die direkte Reaktion der Disäure mit Phenol zum entsprechenden Ester beschrieben. In Beispiel 2 der EP 3026074 A1 wird ein Dimethylester mit Phenol umgesetzt. Die Ausbeute für beide Varianten der Phenylesterherstellung sind aber noch verbesserungsfähig. Anschließend erfolgt dann die Herstellung des Polyestercarbonats.

In EP 3248999 A1 wird die Herstellung eines Diphenylesters in einem Lösungsmittel und unter Einsatz von Phosgen beschrieben. Da die anschließende Reaktion zum aliphatischen Polyestercarbonat ohne Phosgen auskommt, ist die Kombination eines Phosgenverfahrens mit einem Umesterungsverfahren in einem Anlagenteil sehr unvorteilhaft. Damit ist das in EP 3248999 A1 beschriebene Verfahren auch nicht optimal.

In Kricheldorf et al. (Macromol. Chem. Phys 2010, 211, 1206-1214) wird beschrieben, dass in Polyester aus Cyclohexandicarbonsäure und Isosorbid ausgehend von Cyclohexandisäure oder dem Cyclohexandimethylester nicht zugänglich ist (bzw. nur sehr geringe Molekulargewichte ergibt) und nur aus dem Säurechlorid der Cyclohexandicarbonsäure darstellbar ist.

In der WO2002/10111 A1 wird ein Verfahren zur Herstellung eines Polyestercarbonats beschrieben, bei dem zunächst eine aliphatische, lineare Disäure mit Diphenylcarbonat zum Diphenylester umgesetzt wird. Beispiele die belegen, dass das Verfahren auch mit den meist thermisch instabileren cycloaliphatischen Disäuren durchgeführt werden kann, fehlen in diesem Dokument. Ebenso beschreibt dieses Dokument die Verwendung von sehr geringen Mengen an Alkalimetallionen als Katalysator in den Beispielen bzw. eines sehr breiten Mengenbereichs im allgemeinen Teil. Des Weiteren wird eine quartäre Stickstoffbase als weiterer Katalysator eingesetzt. Bei diesen handelt es sich in der Regel um schwerflüchtige Salze, die meist im Reaktionssystem verbleiben. Zudem werden die erhaltenen Diester im Anschluss mit aromatischen Alkoholen (wie beispielsweise Phenol) zu einem Polyestercarbonat umgesetzt. Phenole weisen eine deutlich höhere Acidität als aliphatische Alkohole auf.

Die Herstellung von aliphatischen, insbesondere von cycloaliphatischen Polyestercarbonaten stellt den Fachmann also weiterhin vor Probleme. Die Reaktivität der Einsatzstoffe und der Zwischenprodukte lässt sich nur in geringem Maße durch höhere Temperaturen steigern, da ansonsten das Polyestercarbonat geschädigt wird. Eine übermäßige Steigerung der Reaktionszeiten kann neben den unmittelbaren praktischen Nachteilen ebenso zu einer Schädigung führen.

Der vorliegenden Erfindung lag daher die Aufgabe zugrunde ein Verfahren zur Herstellung eines Polyestercarbonats bereitzustellen, welches mindestens einen Nachteil des Stands der Technik verbessert. Insbesondere lag der vorliegenden Erfindung die Aufgabe zu Grunde ein Verfahren bereitzustellen, durch das ein ausreichender Polymeraufbau ohne starke Schädigung des Polymers erreicht wird.

Als ausreichender Polymeraufbau wird im Rahmen der vorliegenden Erfindung verstanden, dass die relative Viskosität des Polyestercarbonats in einem Bereich von 1,18 bis 1,30 liegt. Bei einer relativen Viskosität oberhalb dieses Bereiches ist eine thermoplastische Verarbeitbarkeit nur noch schwer möglich. Eine zu niedrige relative Viskosität führt zu unzureichenden mechanischen und thermischen Eigenschaften.

Soweit nicht anders angegeben, wird die relativen Viskosität des Polyestercarbonats über eine Messung der mit einem Ubbelohde Viskosimeter und Methylenchlorid als Lösungsmittel bei 25°C bestimmt. Dabei wird eine Lösung enthaltend 1 Gewichtsprozent Polyestercarbonat verwendet. Dem Fachmann ist die Bestimmung der relativen Lösungsviskosität mittels Ubbelohdeviskosimeter bekannt. Erfindungsgemäß wird diese bevorzugt gemäß DIN 51562-3; 1985-05 durchgeführt. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Ein nicht stark geschädigtes Polyestercarbonat ist hell, transparent und nicht spröde.

Überraschenderweise wurde gefunden, das Verfahren zur Herstellung eines Polyestercarbonats umfassend die Schritte:
(i) Reaktion eines Gemisches, umfassend mindestens eine lineare aliphatische Dicarbonsäure und/oder mindestens eine cycloaliphatische Dicarbonsäure und mindestens ein aliphatisches und/oder aromatisches Carbonat, in Anwesenheit mindestens eines ersten Katalysators, der basisch wirkt, zu einem aliphatischen Diester der Formel (1) 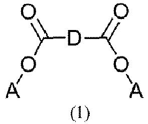 worin
   A jeweils unabhängig voneinander für einen aliphatischen oder aromatischen Rest steht,
   D für R₃ steht oder für eine der Formeln (1a) oder (1b),
      wobei R₃ für eine lineare Alkylen-Gruppe mit 3 bis 16 Kohlenstoffatomen steht und diese Alkylen-Gruppe gegebenenfalls einfach oder mehrfach substituiert sein kann oder 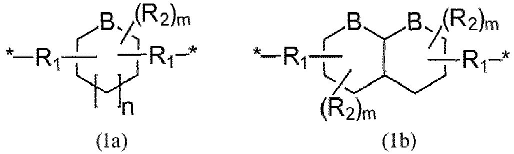
   worin
      B jeweils unabhängig voneinander für eine CH₂-Gruppe, für O oder für S steht,
      R₁ jeweils unabhängig voneinander für eine Einfachbindung oder eine Alkylen-Gruppe mit 1 bis 10 Kohlenstoffatomen steht und
      R₂ jeweils unabhängig voneinander für eine Alkylen-Gruppe mit 1 bis 10 Kohlenstoffatomen steht,
      n eine Zahl zwischen 0 und 3 ist,
      m eine Zahl zwischen 0 und 6 ist und die "^{∗}" die Positionen angeben, an denen die -(C=O)OA-Gruppen der Formel (1) vorhanden sind.
(ii) Abtrennung des aliphatischen Diesters der Formel (1) vom Gemisch des Verfahrensschritts (i),
(iii) Reaktion des abgetrennten aliphatischen Diesters der Formel (1), mindestens einer Dihydroxy-Verbindung und mindestens eines Diarylcarbonats in einem Schmelzeumesterungsverfahren in Anwesenheit einer Mischung enthaltend einen zweiten Katalysator und einen dritten Katalysator,
   wobei der zweite Katalysator eine tertiäre Stickstoffbase ist,
   wobei der dritte Katalysator ein basisch wirkendes Alkalimetallsalz ist
   und wobei der Anteil der Alkalimetallkationen in Verfahrensschritt (iii) 0,0010 bis 0,0030 Gew.-%, bezogen auf alle im Verfahrensschritt (iii) eingesetzten Komponenten, beträgt
   die gewünschten Verbesserungen zeigt.

Ebenso wurde gefunden, dass ein Verfahren zur Herstellung eines Polyestercarbonats umfassend die Schritte:
(i) Reaktion eines Gemisches, umfassend mindestens eine cycloaliphatische Dicarbonsäure und mindestens ein aliphatisches und/oder aromatisches Carbonat, in Anwesenheit mindestens eines ersten Katalysators, der basisch wirkt, zu einem cycloaliphatischen Diester der Formeln (Ia) oder (Ib) 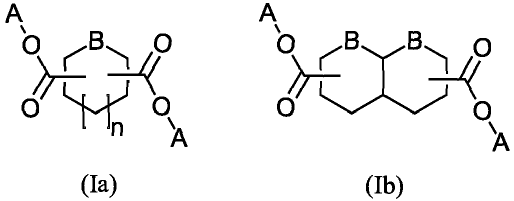 worin
   A jeweils unabhängig voneinander für einen aliphatischen oder aromatischen Rest steht,
   B jeweils unabhängig voneinander für ein Kohlenstoffatom oder ein Heteroatom, welches ausgewählt ist aus der Gruppe, bestehend aus O, S und N, steht und
   n eine Zahl zwischen 0 und 3 ist,
(ii) Abtrennung des cycloaliphatischen Diesters der Formel (Ia) oder (Ib) vom Gemisch des Verfahrensschritts (a),
(iii) Reaktion des abgetrennten cycloaliphatischen Diesters der Formel (Ia) oder (Ib), mindestens einer Dihydroxy-Verbindung und mindestens eines Diarylcarbonats in einem Schmelzeumesterungsverfahren in Anwesenheit einer Mischung enthaltend einen zweiten Katalysator und einen dritten Katalysator,
   wobei der zweite Katalysator eine tertiäre Stickstoffbase ist
   wobei der dritte Katalysator ein basisch wirkendes Alkalimetallsalz ist
   und wobei der Anteil der Alkalimetallkationen in Verfahrensschritt (iii) 0,0010 bis 0,003 Gew.-%, bezogen auf alle im Verfahrensschritt (iii) eingesetzten Komponenten, beträgt,
die gewünschten Verbesserungen zeigt.

Dabei ist es erfindungsgemäß bevorzugt, dass in der Formel (1), (1a) oder (1b) beide A gleich sind. Weiterhin bevorzugt stehen sie für eine substituierte oder unsubstituierte Phenylgruppe, besonders bevorzugt für eine unsubstituierte Phenylgruppe. Dabei ist es erfindungsgemäß bevorzugt, dass in der Formel (Ia) oder (Ib) beide A gleich sind. Weiterhin bevorzugt stehen sie für eine substituierte oder unsubstituierte Phenylgruppe, besonders bevorzugt für eine unsubstituierte Phenylgruppe.

Ebenso ist es bevorzugt, dass in der Formel (1a) und n gleich 0 oder 1 ist. Ebenso ist es bevorzugt, dass in der Formel (Ia) und n gleich 0 oder 1 ist.

Mindestens eine, bevorzugt alle der oben genannten Aufgaben wurden durch die vorliegende Erfindung gelöst.

In Verfahrensschritt (i) wird erfindungsgemäß mindestens eine lineare aliphatische und / oder mindestens eine cycloaliphatische Dicarbonsäure eingesetzt. Bevorzugt wird mindestens eine cycloaliphatische Dicarbonsäure eingesetzt. Ebenso bevorzugt wird mindestens eine lineare aliphatische Dicarbonsäure eingesetzt. Ebenso bevorzugt wird eine Mischung aus einer linearen aliphatischen Dicarbonsäure und einer cycloaliphatischen Dicarbonsäure eingesetzt.

Es ist insbesondere bevorzugt, dass der erfindungsgemäße aliphatische Diester dargestellt wird durch die allgemeine Formel (1): 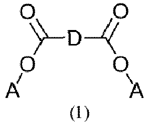 worin
A jeweils unabhängig voneinander für einen aliphatischen oder aromatischen Rest steht,
D für R₃ steht oder für eine der Formeln (1a) oder (1b),
   wobei R₃ für eine lineare Alkylen-Gruppe mit 3 bis 16 Kohlenstoffatomen, bevorzugt 3 bis 8 Kohlenstoffatomen, besonders bevorzugt 3 bis 6 Kohlenstoffatomen, des Weiteren bevorzugt 3 oder 4 Kohlenstoffatomen steht und diese Alkylen-Gruppe gegebenenfalls einfach oder mehrfach substituiert sein kann oder 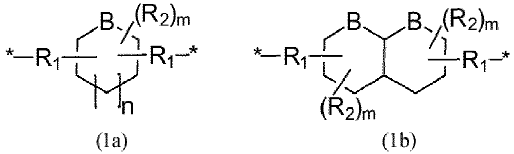
worin
   B jeweils unabhängig voneinander für eine CH₂-Gruppe, für O oder für S steht,
   R₁ jeweils unabhängig voneinander für eine Einfachbindung oder eine Alkylen-Gruppe mit 1 bis 10 Kohlenstoffatomen, bevorzugt eine Einfachbindung oder eine Alkylen-Gruppe mit 1 bis 9 Kohlenstoffatomen, besonders bevorzugt eine Einfachbindung oder eine Alkylen-Gruppe mit 1 bis 8 Kohlenstoffatomen steht, ebenso bevorzugt eine Einfachbindung oder eine Alkylen-Gruppe mit 1 bis 5 Kohlenstoffatomen, insbesondere bevorzugt eine Einfachbindung, steht und
   R₂ jeweils unabhängig voneinander für eine Alkylen-Gruppe mit 1 bis 10 Kohlenstoffatomen, bevorzugt 1 bis 9 Kohlenstoffatomen, besonders bevorzugt 1 bis 8 Kohlenstoffatomen steht,
   n eine Zahl zwischen 0 und 3, bevorzugt zwischen 0 und 2, besonders bevorzugt zwischen 0 und 1, ganz besonders bevorzugt 1 ist,
   m eine Zahl zwischen 0 und 6, bevorzugt zwischen 0 und 3, besonders bevorzugt zwischen 0 und 2, ganz besonders bevorzugt 0 ist und die "^{∗}" die Positionen angeben, an denen die -(C=O)OA-Gruppen der Formel (1) vorhanden sind.

Dabei versteht es sich, dass wenn R₁ eine Einfachbindung darstellt, R₁ somit Null Kohlenstoffatome umfasst.

Erfindungsgemäß wird der Begriff "lineare Alkylen-Gruppe" bzw. "lineare (aliphatische) Dicarbonsäure" in Abgrenzung zu einer "cycloaliphatischen Alkylen-Gruppe" bzw. "cycloaliphatischen Dicarbonsäure" verwendet. Dabei enthält die lineare Variante keinerlei Cyclus. Allerdings kann beispielsweise R₃, welches eine lineare Alklyen-Gruppe darstellt, gegebenenfalls substituiert sein. Dies führt dazu, dass die lineare Alkylen-Gruppe im Weitesten Sinne auch als "verzweigt" bezeichnet werden kann. Damit fallen unter den Begriff "lineare Alkylen-Gruppe" erfindungsgemäß bevorzugt auch "verzweigte Alkylen-Gruppen". In keinem Fall enthalten diese jedoch Cyclen.

Steht D für R₃, so ist es bevorzugt, dass R₃ für eine lineare Alkylen-Gruppe mit 3 bis 16 Kohlenstoffatomen, bevorzugt 3 bis 8 Kohlenstoffatomen, besonders bevorzugt 3 bis 6 Kohlenstoffatomen, des Weiteren bevorzugt 3 oder 4 Kohlenstoffatomen steht und diese Alkylen-Gruppe gegebenenfalls einfach oder mehrfach substituiert sein kann. Dabei kann diese Alkylen-Gruppe bevorzugt mit mindestens einer Alkylen-Gruppe, welche bevorzugt 1 bis 16 Kohlenstoffatome aufweist, substituiert sein. Besonders bevorzugt ist die lineare Alkylen-Gruppe nicht substituiert oder mit mindestens einer Alkylen-Gruppe, welche 1 bis 16 Kohlenstoffatome, bevorzugt 1 bis 10, Kohlenstoffatome, besonders bevorzugt 1 bis 5 Kohlenstoffatome, ganz besonders bevorzugt 1 bis 4 Kohlenstoffatome, ebenso bevorzugt 1 bis 3 Kohlenstoffatome aufweist, substituiert. Wenn sie substituiert ist, weist sie mindestens ein tertiäre, gegebenenfalls aber auch mindestens ein quartäres Kohlenstoffatom auf. Besonders bevorzugt ist die lineare Alkylen-Gruppe R₃ nicht substituiert oder mit einer bis drei Alkylen-Gruppen substituiert. Liegen mehr als eine Substitution vor, so kann diese an einem Kohlenstoffatom (es resultiert ein quartäres Kohlenstoffatom) oder auch an mehreren Kohlenstoffatomen (es resultieren zwei tertiäre Kohlenstoffatome) der linearen Alkylen-Gruppe R₃ vorhanden sein. Des Weiteren bevorzugt ist die lineare Alkylen-Gruppe R₃ nicht substituiert oder mit einer bis drei Methyl-Gruppen substituiert. Ganz besonders bevorzugt wird R₃ ausgewählt aus -CH₂-CH₂-CH₂-, -CH₂-CH₂-CH₂-CH₂-, -CH₂-CH₂-CH₂-CH₂-CH₂-,-CH₂-CH₂-CH₂-CH₂-CH₂-CH₂-, -CH₂-CH₂-CH₂-CH₂-CH₂-CH₂-CH₂-, -CH₂-CH₂-CH₂-CH₂-CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)- und -CH(CH₃)-CH₂-CH₂-C(CH₃)₂-. Ebenso bevorzugt wird R₃ ausgewählt aus -CH₂-CH₂-CH₂-CH₂-, -CH₂-C(CH₃)₂-CH₂-, -CH₂-CH(CH₃)-CH₂-C(CH₃)₂-, -CH₂-C(CH₃)₂-CH₂-CH(CH₃)- und -CH(CH₃)-CH₂-CH₂-C(CH₃)₂-. Ganz besonders bevorzugt steht R₃ für-CH₂-C(CH₃)₂-CH₂-.

Steht D für eine der Formeln (1a) oder (1b), dann ist es bevorzugt, dass
B jeweils unabhängig voneinander für eine CH₂-Gruppe, für O oder für S steht, bevorzugt für eine CH₂-Gruppe steht,
R₁ jeweils unabhängig voneinander für eine Einfachbindung oder eine lineare Alkylen-Gruppe mit 1 bis 10 Kohlenstoffatomen, insbesondere bevorzugt eine Einfachbindung, steht und
R₂ jeweils unabhängig voneinander für eine lineare Alkylen-Gruppe mit 1 bis 10 Kohlenstoffatomen, bevorzugt 1 bis 9 Kohlenstoffatomen, besonders bevorzugt 1 bis 8 Kohlenstoffatomen steht,
n eine Zahl zwischen 0 und 3, bevorzugt zwischen 0 und 2, besonders bevorzugt zwischen 0 und 1, ganz besonders bevorzugt 1 ist,
m eine Zahl zwischen 0 und 6 , bevorzugt zwischen 0 und 3, besonders bevorzugt zwischen 0 und 2, ganz besonders bevorzugt 0 ist und die "^{∗}" die Positionen angeben, an denen die -(C=O)OA-Gruppen der Formel (1) vorhanden sind.

Aus der Anzahl von m ist bereits ersichtlich, dass es in den Formeln (1a) und (1b) möglich ist, dass zwei R₂ an jeweils einem Kohlenstoffatom oder aber auch ein R₁-^{∗} und ein R₂ an jeweils einem Kohlenstoffatom vorhanden sind. Ebenso ist es möglich, dass immer nur ein Substituent R₁-^{∗} oder R₂ an einem Kohlenstoffatom vorhanden ist.

Insbesondere ist es bevorzugt, dass es sich bei der cycloaliphatischen Dicarbonsäure um hydrierte Dimerfettsäure oder die Dicarbonsäuren der Verbindung der Formel (IIa), (IIb) oder Mischungen davon handelt. Dem Fachmann sind hydrierte Dimerfettsäuren bekannt. Dabei ist es insbesondere bekannt, dass sich es sich um eine Mischung unterschiedlicher Verbindungen handeln kann. Diese Mischung kann auch cycloaliphatische sowie lineare Verbindungen enthalten. Diese sind erfindungsgemäß durch die Verwendung mindestens einer linearen aliphatischen Dicarbonsäure und mindestens einer cycloaliphatischen Dicarbonsäure umfasst.

Damit wird bevorzugt hydrierte Dimerfettsäure als erfindungsgemäße lineare aliphatische und/oder cyloaliphatische Dicarbonsäure eingesetzt.

Insbesondere ist es bevorzugt, dass die mindestens eine lineare aliphatische Dicarbonsäure ausgewählt ist aus der Gruppe, bestehend aus 2,2,4-Trimethyladipinsäure, 2,4,4-Trimethyladipinsäure, 2,2,5-Trimethyladipinsäure und 3,3-Dimethylglutarsäure. Ganz besonders bevorzugt handelt es sich um 3,3-Dimethylglutarsäure.

Insbesondere ist es bevorzugt, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure, Decahydro-2,7-naphtalindicarbonsäure und hydrierter Dimerfettsäure. Ebenso ist es bevorzugt, dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure und Decahydro-2,7-naphtalindicarbonsäure. Es können auch beliebige Mischungen eingesetzt werden. Ganz besonders bevorzugt handelt es sich um 1,4-Cyclohexandicarbonsäure, 1,3-Cyclohexandicarbonsäure oder 1,2-Cyclohexandicarbonsäure.

Insbesondere ist es des Weiteren bevorzugt, dass eine Mischung aus einer linearen aliphatischen Dicarbonsäure und einer cycloaliphatischen Dicarbonsäure verwendet wird. Dabei ist es insbesondere bevorzugt, dass die mindestens eine lineare aliphatische Dicarbonsäure ausgewählt ist aus der Gruppe, bestehend aus 2,2,4-Trimethyladipinsäure, 2,4,4-Trimethyladipinsäure, 2,2,5-Trimethyladipinsäure und 3,3-Dimethylglutarsäure und dass die mindestens eine cycloaliphatische Dicarbonsäure ausgewählt ist aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure, Decahydro-2,7-naphtalindicarbonsäure und hydrierter Dimerfettsäure. Insbesondere ist eine Mischung aus 3,3-Dimethylglutarsäure und 1,4-Cyclohexandicarbonsäure, 1,3-Cyclohexandicarbonsäure oder 1,2-Cyclohexandicarbonsäure bevorzugt.

Dem Fachmann ist bekannt, wie der die verwendeten Dicarbonsäuren in Formel (1), (1a), (1b), (Ia) und (Ib) einfügen muss, um den entsprechenden erfindungsgemäßen Diester zu erhalten.

In einer bevorzugten Ausführungsform erfolgt die Abtrennung des aliphatischen, bevorzugt cycloaliphatischen Diesters der Formel (Ia) oder (Ib) vom Gemisch des Verfahrensschritts (i) durch Destillation.

Dies war insbesondere überraschend, da nicht davon auszugehen war, dass der aliphatische, bevorzugt cycloaliphatische Dieester ohne Weiteres destillierbar ist und trotz der thermischen Belastung eine gute Ausbeute erreicht wird.

Da eine Destillation zudem relativ unaufwendig ist, kann eine entsprechende Aufarbeitung auch in bereits existierenden Industrieanlagen Anwendung finden.

Schritt (i) des erfindungsgemäßen Verfahrens umfasst die Reaktion eines Gemisches, umfassend mindestens eine lineare aliphatische Dicarbonsäure und/oder mindestens eine cycloaliphatische Dicarbonsäure und mindestens ein aliphatisches und/oder aromatisches Carbonat, in Anwesenheit mindestens eines ersten Katalysators zu einem cycloaliphatischen Diester der Formel (1), bevorzugt Formeln (Ia) oder (Ib). Diese Reaktion soll im Folgenden beispielhaft an der Reaktion einer Cyclohexandisäure mit Diphenylcarbonat (DPC) erläutert werden. Die Erfindung ist jedoch nicht auf diese speziellen Verbindungen beschränkt, obwohl diese bevorzugt sind. Der Fachmann ist in der Lage, die Reaktion und die entsprechenden Erläuterungen auf andere der beschriebenen Verbindungen zu übertragen.

Es findet in Schritt (i) die folgende (beispielhafte) Reaktion statt:

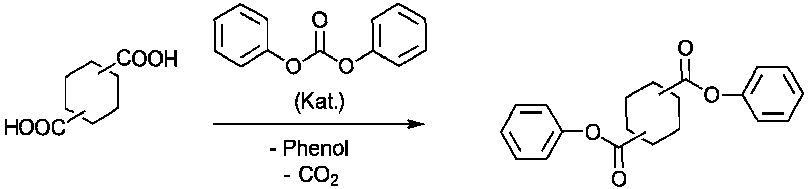

Bei der Reaktion wird somit Kohlenstoffdioxid und Phenol (bzw. eine Verbindung A-OH, wobei A die zu Formel (1), bevorzugt Formel (Ia) und (Ib) beschriebenen Bedeutungen hat) freigesetzt. Es hat sich erfindungsgemäß als vorteilhaft herausgestellt, wenn dieses Kondensationsprodukt A-OH während des Reaktionsschrittes (i) abgetrennt wird. Dabei kann der Ausdruck "während Schritt (i)" bedeuten, dass mit der Abtrennung direkt zu Beginn des Verfahrensschrittes (i) begonnen wird oder aber erst nach einer zeitlichen Verzögerung nach Beginn des Schrittes (i). Die Abtrennung kann auf dem Fachmann bekannte Art und Weise erfolgen, bevorzugt durch Anlegen eines den Reaktionsbedingungen angepassten Unterdrucks. Dabei muss jedoch sichergestellt werden, dass Temperatur und Unterdruck bei Verfahrensschritt (i) so gewählt sind, dass das aliphatische und/oder aromatische Carbonat als Edukt und bevorzugt zunächst auch der cycloaliphatische Diester als Produkt nicht ebenfalls von dem Reaktionsgemisch abgetrennt wird.

Des Weiteren umfasst der erfindungsgemäße Verfahrensschritt (i) bevorzugt mindestens einen, besonders bevorzugt alle der folgenden Schritte (ia) bis (id):
(ia) Aufschmelzen der mindestens einen linearen aliphatischen Dicarbonsäure und/oder mindestens einen cycloaliphatischen Dicarbonsäure, bevorzugt der mindestens einen cycloaliphatischen Dicarbonsäure und des aliphatischen und/oder aromatischen Carbonats. Dies erfolgt bevorzugt unter Schutzgasatmosphäre, bevorzugt unter Stickstoff und/oder Argon. Alternativ kann das Aufschmelzen auch im Vakuum erfolgen.

Es ist erfindungsgemäß bevorzugt, dass ein molarer Überschuss an dem mindestens einem aliphatischen und/oder aromatischen Carbonat im Verhältnis zur mindestens einen linearen aliphatischen Dicarbonsäure und/oder mindestens einen cycloaliphatischen Dicarbonsäure, bevorzugt mindestens einen cycloaliphatischen Dicarbonsäure eingesetzt wird. Besonders bevorzugt wird auf ein Mol der mindestens einen linearen aliphatischen Dicarbonsäure und/oder mindestens einen cycloaliphtischen Dicarbonsäure, bevorzugt mindestens einen cycloaliphatischen Dicarbonsäure 2,01 bis 2,5, besonders bevorzugt 2,05 bis 2,2 Mole des mindestens einen aliphatischen und/oder aromatischen Carbonats eingesetzt. Dies bringt insbesondere den Vorteil, dass eine hohe Ausbeute erzielt werden kann. Zudem können Verluste am Carbonat, welche gegebenenfalls durch die Abtrennung des Kondensationsproduktes erfolgen, ausgeglichen werden.

In einem Aspekt der Erfindung kann der Schmelze im Verfahrensschritt (ia) ein oder mehrere Stabilisatoren zugesetzt werden. Der erfindungsgemäße aliphatische, bevorzugt cycloaliphatische Diester wird während der Reaktion hohem thermischen Stress ausgesetzt. Zudem ist es bevorzugt, die gesamte Reaktion möglichst frei von Sauerstoff durchzuführen. Sauerstoff führt unweigerlich zur Bildung von Oxidationsprodukten. Um diese Bildung zu minimieren, können ebenfalls Stabilisatoren und/oder Antioxidatien eingesetzt werden.
(ib) Erhitzen des Gemisches, bevorzugt der aus Schritt (ia) erhaltenen Schmelze. Das Erhitzen erfolgt bevorzugt auf 150 °C bis 300 °C, besonders bevorzugt auf 180 °C bis 280 °C und insbesondere bevorzugt auf 190 °C bis 240 °C.
(ic) Reaktion des Gemisches, bevorzugt des aus Schritt (ib) erhaltenen Gemisches unter Einbringung von Mischenergie, bevorzugt durch Rühren. Die Reaktionszeit in diesem Schritt hängt von der Menge der Einsatzstoffe ab. Bevorzugt liegt die Reaktionszeit des Schritts (ic) zwischen 0,5 h bis 24 h, bevorzugt zwischen 1 h und 18 h und insbesondere bevorzugt zwischen 1,5 h und 10 h. Dabei ist es bevorzugt, die Reaktionszeit so zu wählen, dass das Carbonat annährend vollständig zur Reaktion gebracht wird. Der Fortschritt der Reaktion lässt sich auf dem Fachmann bekannte Weise durch die Bildung von Kohlenstoffdioxid verfolgen (siehe Reaktionsschema oben).
(id) Abtrennung des Kondensationsprodukts A-OH, bevorzugt aus dem aus Schritt (ic) erhaltenen Gemisch. Demgemäß ist es bevorzugt, dass das erfindungsgemäße Verfahren dadurch gekennzeichnet ist, dass während der Reaktion in Verfahrensschritt (i) die flüchtigen Bestandteile, welche einen Siedepunkt unterhalb des aliphatischen Diesters der Formel (1), bevorzugt des cycloaliphatischen Diesters der Formel (Ia) oder (Ib) und unterhalb des aliphatischen und/oder aromatischen Carbonats aufweisen, mittels Destillation gegebenenfalls schrittweise abgetrennt werden. Eine schrittweise Abtrennung wird dabei bevorzugt gewählt, wenn unterschiedliche flüchtige Bestandteile abgetrennt werden. Ebenso bevorzugt wird eine schrittweise Abtrennung gewählt, um eine möglichst vollständige Abtrennung des oder der flüchtigen Bestandteils/e zu gewährleisten. Bei den flüchtigen Bestandteilen handelt es sich bevorzugt um die Verbindung A-OH, wobei A die zu Formel (1), bevorzugt zu Formel (Ia) und (Ib) beschriebenen Bedeutungen hat. Bevorzugt handelt es sich dabei um substituiertes oder unsubstituiertes Phenol, wenn A für eine substituierte oder unsubstituierte Phenylgruppe steht.

Die Abtrennung des Kondensationsproduktes erfolgt bevorzugt bei Temperaturen von 150 °C bis 250 °C, besonders bevorzugt 180 °C bis 230 °C. Weiterhin bevorzugt beträgt das Vakuum bei der Abtrennung 500 mbar bis 0,01 mbar. Insbesondere ist es bevorzugt, dass die Abtrennung schrittweise durch Reduktion des Vakuums erfolgt. Ganz besonders bevorzugt beträgt das Vakuum in der letzten Stufe 10 mbar bis 0,01 mbar, um Phenol als Kondensationsprodukt zu entfernen.

Die in Verfahrensschritt (i) eingesetzte mindestens eine cycloaliphatische Dicarbonsäure wird bevorzugt ausgewählt aus einer Verbindung der chemischen Formel (IIa), (IIb) oder Mischungen davon 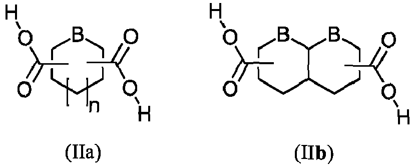 worin
B jeweils unabhängig voneinander für ein Kohlenstoffatom oder ein Heteroatom, welches ausgewählt ist aus der Gruppe, bestehend aus O und S, steht, bevorzugt für eine CH₂-Gruppe oder ein Heteroatom, welches ausgewählt ist aus der Gruppe, bestehend aus O und S, steht und n eine Zahl zwischen 0 und 3 ist. Dabei ist es des Weiteren bevorzugt, dass B für ein Kohlenstoffatom oder O steht, bevorzugt für eine CH₂-Gruppe oder O steht und n eine Zahl zwischen 0 und 3, bevorzugt 0 oder 1 ist.

Bevorzugt wird die mindestens eine cycloaliphatische Dicarbonsäure in Verfahrensschritt (i) ausgewählt aus der Gruppe, bestehend aus 1,4-Cyclohexandicarbonsäure, 1,3-Cyclohexandicarbonsäure, 1,2-Cyclohexandicarbonsäure, Tetradihydro-2,5-furandicarbonsäure, Tetradihydro-2,5-dimethyl-furandicarbonsäure, Decahydro-2,4-naphtalindicarbonsäure, Decahydro-2,5-naphtalindicarbonsäure, Decahydro-2,6-naphtalindicarbonsäure, Decahydro-2,7-naphtalindicarbonsäure sowie Mischungen aus diesen aliphatischen Dicarbonsäuren.

Weiter bevorzugt ist die cycloaliphatische Dicarbonsäure in Verfahrensschritt (i) ausgewählt aus der Gruppe, bestehend aus 1,4-Cyclohexandicarbonsäure, 1,3-Cyclohexandicarbonsäure und 1,2-Cyclohexandicarbonsäure sowie Mischungen aus diesen aliphatischen Dicarbonsäuren. Am meisten bevorzugt wird 1,4-Cyclohexandicarbonsäure eingesetzt.

Das in Verfahrensschritt (i) eingesetzte mindestens eine aliphatische und/oder aromatische Carbonat ist bevorzugt mindestens ein aromatisches Carbonat. Cycloaliphatische Disäuren, die mit aliphatischen Alkoholen verestert sind, zeigen in der Umesterungsreaktion zu Polyestercarbonaten eine geringe Reaktivität als solche mit aromatischen Alkoholen, so dass die Molekulargewichte der entsprechenden Polyestercarbonate nach Umesterungsreaktion eher gering sind. Diese Polymere zeigen dann nur ungenügende Eigenschaften. Daher ist der Einsatz von aromatischen Carbonaten besonders vorteilhaft für die resultierenden Polymereigenschaften. Besonders bevorzugt wird in Verfahrensschritt (i) ein aromatisches Carbonat der Formel (III) eingesetzt 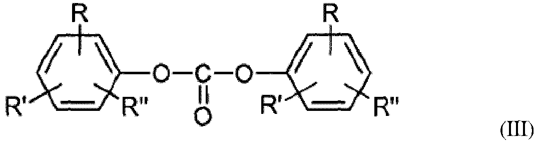 wobei R, R' und R" jeweils unabhängig voneinander gleich oder verschieden sein können und für Wasserstoff, gegebenenfalls verzweigtes C1-C34 Alkyl, C7-C34-Alkylaryl oder C6-C34-Aryl stehen, R weiterhin auch -COO-R‴ bedeuten kann, wobei R‴ für gegebenenfalls verzweigtes C1-C34-Alkyl, C7-C34-Alkylaryl oder C6-C34-Aryl steht. Solche Carbonate sind beispielsweise in EP-A 1 609 818 beschrieben. Bevorzugt sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1 -Methyl-1 -phenylethyl)-phenyl-phenyl-carbonat und Di-[4-(1 -methyl-1 -phenylethyl)-phenyl]-carbonat. Ganz besonders bevorzugt wird in Verfahrensschritt (i) substituiertes oder unsubstituiertes, bevorzugt unsubstituiertes Diphenylcarbonat als aromatisches Carbonat eingesetzt.

Die Carbonate können auch mit Restgehalten der Monohydroxyarylverbindungen, aus denen sie hergestellt wurden, eingesetzt werden. Die Restgehalte der Monohydroxyarylverbindungen können bis zu 20%, vorzugsweise 10%, besonders bevorzugt bis 5% und ganz besonders bevorzugt bis zu 2% betragen. Dies bedeutet, dass im erfindungsgemäßen Verfahren auch Carbonate verwendet werden können, welche keine aufwendigen Reinigung nach ihrem Herstellungsverfahren unterzogen werden müssen. Da im erfindungsgemäßen Verfahren die Monohydroxyarylverbindung, aus der das Carbonat erhalten wurde, als Kondensationsprodukt A-OH wieder anfällt und bevorzugt abgetrennt wird, stören diese Verunreinigungen die Reaktion nicht. Durch ein so günstig hergestelltes Carbonat kann das erfindungsgemäße Verfahren insgesamt noch wirtschaftlich vorteilhafter gestaltet werden.

In einem anderen Aspekt kann das mindestens eine aliphatische und/oder aromatische Carbonat auch phosgenfrei hergestellt werden. Dies ermöglicht es, dass das gesamte Verfahren zur Herstellung eines Polyestercarbonats phosgenfrei durchgeführt werden kann.

Es hat sich herausgestellt, dass erfindungsgemäß die Anwesenheit mindestens eines ersten Katalysators, der basisch wirkt, im Verfahrensschritt (i) notwendig ist. Andernfalls findet die Reaktion zwischen Carbonat und Disäure nicht statt. Dies belegt, dass Reaktionsbedingungen in Bezug auf lineare aliphatische Dicarbonsäure nicht auf die Umsetzung von cycloaliphatischen Dicarbonsäuren übertragen werden können, da in der WO 02/10111 A1 die Reaktion von DPC mit linearen aliphatischen Dicarbonsäuren bei Temperaturen von 180 °C beschrieben wird und auch bevorzugt ist. Es wird beschrieben, dass Reaktionsprodukte, welche unter Anwesenheit eines basischen Katalysators erhalten werden, mehr Verunreinigungen aufweisen.

Erfindungsgemäß wurde nun gefunden, dass bei der Reaktion mit linearen aliphatischen und/oder cycloaliphatischen Dicarbonsäuren, bevorzugt cycloaliphatischen Dicarbonsäuren ein Katalysator zumindest bei moderaten Temperaturen notwendig ist und dass dennoch mit dem erfindungsgemäßen Verfahren Produkte mit hoher Reinheit erhalten werden können.

Bei dem ersten Katalysator, handelt es sich um eine Base oder einen basischen Umesterungskatalysator. Hierbei können beispielsweise folgende Basen bzw. Katalysatoren eingesetzt werden:
Alkalimetallverbindungen wie LiOH, NaOH, KOH, CsOH, Li₂CO₃, Na₂CO₃, K₂CO₃, Cs₂CO₃, LiOAc, NaOAc, KOAc, CsOAc, Eralkalimetallverbindungen wie Ca(OH)₂, Ba(OH)₂, Mg(OH)₂, Sr(OH)₂, CaCO₃, BaCO₃, MgCO₃, SrCO₃, Ca(OAc)₂, Ba(OAc)₂, Mg(OAc)₂, Sr(OAc)₂, anorganische oder organische basische Verbindungen beispielsweise Lithium-, Natrium-, Kalium-, Cäsium-, Calzium-, Barium-, Magnesium-, -halogenide, -phenolate (wie Na-phenolat), -diphenolate, -fluoride, -phosphate, -hydrogenphosphate, -boranate, Stickstoff- und Phosphorbasen wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydoxid, Tetraethylammoniumhydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexylidendi-1,5,7-triazabi-cyclo-[4,4,0]-dec-5-en, 7,7'-Decylidendi-1,5,7-triazabicyclo-[4,4,0]-dec-5-en, 7,7'-Dodecyliden-di-1,5,7-tri-aza-bicyclo-[4,4,0]-dec-5-en oder Phosphazene wie bei-spielsweise die Phosphazen-Base P1-t-Oct = tert.-Octyl-imino-tris-(dimethylamino)-phosphoran, Phosphazen-Base P1-t-Butyl = tert.-Butyl-imino-tris-(dimethylamino)-phosphoran, BEMP = 2-tert.-Butylimino-2-diethylamino-1,3-dimethyl-perhydro-1,3,2-diaza-2-phos-phoran. Ferner Tetramethylammoniumhydroxid, Tetramethylammoniumacetat, Tetramethylammoniumfluorid, Tetramethylammoniumtetraphenylboranat, Dimethyldiphenylammoniumhydroxid, Tetraethylammoniumhydroxid, Cethyltrimethylammoniumtetraphenylboranat und Cethyltrimethylammoniumphenolat. Geeignet sind ferner Phosphoniumkatalysatoren der Formel (IV): 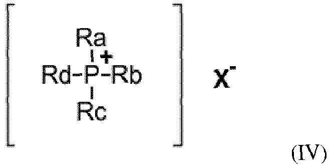
wobei Ra, Rb, Rc und Rd dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und X- ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei Rein C6-C14-Aryl, C7-C15-Arylalkyl oder C5-C6-Cycloalkyl, bevorzugt Phenyl sein kann. Ferner können Umesterungskatalysatoren wie Titanalkanolate wie Titantetrabutanolat, tertiäre Amine wie Triethylamin, DMF, Dimethylsacetamid, Methylpyrrolidon, Tetramethylharnstoff, Dimethylimidazolidon hexalalkylguanidium-halogene. Ferner AlCl₃, FeCl₃, BiCl₃, GaCl₃,SbCl₅, BF₃, Bi(OTf)₃, TiCl₄, ZrCl₄, TiB₄ oder ZrBr₄. Bevorzugte Katalysatoren sind Tetraphenylphosphoniumchlorid, Tetraphenylphosphoniumhydroxid, Tetraphenylphosphoniumphenolat, Natriumphenolat und 4-Dimethylaminpyridin; von diesen besonders bevorzugt ist Tetraphenylphosphoniumphenolat. Die Katalysatoren können auch in beliebigen Kombination (zwei oder mehrere) miteinander eingesetzt werden. Insbesondere können zusätzlich auch Cokatalysatoren eingesetzt werden, um die Geschwindigkeit der Umesterung zu erhöhen. Dazu gehören beispielsweise die vorstehend genannten alkalisch wirkenden Salze der Alkalimetalle und/oder Erdalkalimetalle.

Bevorzugt sind als erster Katalysator Cäsiumcarbonat, Natriumphenolat, Natriumbenzoat und 4-Dimethylaminpyridin sowie Mischungen dieser Substanzen, wobei Natriumphenolat und 4-Dimethylaminpyridin besonders bevorzugt sind. Es ist ebenso bevorzugt, dass das Natriumphenolat als Trihydrat eingesetzt wird.

Diese ersten Katalysatoren werden bevorzugt in Mengen von 0,005 bis 0,2 Gew.-%, weiter bevorzugt 0,01 bis 0,1 Gew.-%, jeweils bezogen auf alle im Verfahrensschritt (i) eingesetzten Komponenten, verwendet.

Bevorzugt wird die Reaktion des Verfahrensschritts (i) bei Temperaturen von 180 bis 280 °C durchgeführt wird. Dabei wird diese Temperatur bevorzugt in den Verfahrensschritten (ib) bis (id), falls vorhanden, eingestellt bzw. beibehalten.

Im erfindungsgemäßen Verfahrensschritt (ii) erfolgt die Abtrennung des aliphatischen, bevorzugt cycloaliphatischen Diesters der Formel (1), bevorzugt der Formel (Ia) oder (Ib) vom Gemisch des Verfahrensschritts (i), bevorzugt mittels Destillation. Der Begriff der "Destillation" ist dem Fachmann als ein thermisches Trennverfahren an sich bekannt. Die Trennwirkung der Destillation beruht auf der Ungleichverteilung der Komponenten auf die Gas- und Flüssigkeitsphase bei eingestelltem thermodynamischen Gleichgewicht. Die Destillation ist besonders dann geeignet, wenn sich die Siedepunkte der zu trennenden Flüssigkeiten unterscheiden bzw. wenn diese einen unterschiedlichen Dampfdruck bei gleicher Temperatur aufweisen. Dem Fachmann ist bekannt, wie er eine solche Trennung über Destillation durchführt und wie er die entsprechenden Apparate unter Berücksichtigung der Abweichungen vom idealen thermodynamischen Gleichgewicht auszuführen hat.

Insbesondere werden unter dem Begriff Destillation die Verfahren der Rektifikation, fraktionierten Destillation, Vakuumdestillation oder Schleppdestillation und beliebige Kombinationen dieser Verfahren oder mit weiteren thermischen Trennverfahren, beispielsweise der Adsorptions-/Desorptionsverfahren und des Strippens vestanden. Möglichkeiten zur Prozessintensivierung beispielsweise durch die Verwendung von Trennwandkolonnen, reaktiven Trennwandkolonnen oder die Möglichkeit der Reaktivdestillation sind dem Fachmann bekannt.

Erfindungsgemäß ist es bevorzugt, dass die Destillation in Verfahrensschritt (ii) bei Drücken von 10 mbar oder kleiner, bevorzugt bei <5 mbar, insbesondere bevorzugt bei 4 mbar bis 0,001 mbar, ganz besonders bevorzugt bei 2 mbar bis 0,01mbar durchgeführt wird. Dies hat den Vorteil, dass die thermische Belastung des Produktes so gering wie möglich gehalten wird und somit unerwünschte Zersetzungs- und Nebenreaktionen minimiert werden können.

Ebenso ist es erfindungsgemäß bevorzugt, dass die Destillation in Verfahrensschritt (ii) bei einer Temperatur von 180 °C bis 280 °C, insbesondere bevorzugt bei 200 °C bis 260 °C, ganz besonders bevorzugt bei 201 °C bis 260 °C durchgeführt wird. Dieser Temperaturbereich ist bevorzugt mit dem oben genannten Druck zu kombinieren, um weiterhin die unerwünschten Zersetzungs- und Nebenreaktionen zu minimieren. Da bei Temperaturen oberhalb von 200 °C für 1,4-Cyclohexandicarbonsäure bereits ein Masseverlust in der Thermogravimetrie beobachtet wurde, war es insbesondere überraschend, dass die erfindungsgemäße Destillation bei diesen Temperaturen mit hohen Ausbeuten und hoher Reinheit verbunden ist.

Erfindungsgemäß werden sowohl die Verfahrensschritte (i) und (ii) bevorzugt in Abwesenheit eines zusätzlichen organischen Lösungsmittels durchgeführt werden. Dies schließt erfindungsgemäß nicht aus, dass sowohl das eingesetzte mindestens eine Carbonat als auch das gebildete Kondensationsprodukt der Reaktion als Lösungsmittel in diesen Reaktionsschritten (soweit möglich) vorhanden sein können. Insbesondere, wenn das Carbonat in einem stöchiometrischem Überschuss zur Dicarbonsäure eingesetzt wird, liegt ein solcher Fall vor. Diese bevorzugte Verfahrensvariante ist besonders schonend. Jedoch ist es erfindungsgemäß bevorzugt, dass kein zusätzliches organisches Lösungsmittel dem Verfahren hinzugefügt wird. Insbesondere bevorzugt werden die Verfahrensschritte (i) und (ii) in Abwesenheit von Methylenchlorid, Methanol und Toluol durchgeführt. Die Abwesenheit eines zusätzlichen organischen Lösungsmittels führt dazu, dass das Verfahren günstig und umweltschonend durchgeführt werden kann.

Im Verfahrensschritt (iii) erfolgt die Reaktion des in Verfahrensschritt (ii) abgetrennten cycloaliphatischen Diesters der Formel (Ia) oder (Ib) aus Verfahrensschritt (i), mindestens einer Dihydroxy-Verbindung und mindestens eines Diarylcarbonats in einem Schmelzeumesterungsverfahren in Anwesenheit einer Mischung enthaltend einen zweiten Katalysator und einen dritten Katalysator, wobei der zweite Katalysator eine tertiäre Stickstoffbase ist, wobei der dritte Katalysator ein basisch wirkendes Alkalimetallsalz ist und wobei der Anteil der Alkalimetallkationen in Verfahrensschritt (iii) 0,0010 bis 0,003 Gew.-%, bezogen auf alle im Verfahrensschritt (iii) eingesetzten Komponenten, beträgt.

Die Reaktionsbedingungen der Schmelzeumesterung sind nicht besonders limitiert, so lange sie geeignet sind, ein entsprechendes Polyestercarbonat herzustellen. Beispielsweise kann die Reaktionstemperatur im Bereich von 100 °C bis 350 °C, bevorzugt 180 °C bis 310 °C liegen. Der Druck kann insbesondere in späteren Verfahrensverlauf reduziert werden. Die Rekationszeit kann zwischen 1 h bis 10 h variieren. Dabei kann die Polymerisation in einer oder mehreren Stufen, wie aus dem Stand der Technik bekannt, durchgeführt werden.

Wie bereits schon oben beschrieben, wurden über dieses erfindungsgemäße Verfahren zur Herstellung eines Polyestercarbonats überraschenderweise Polymere erhalten, welche eine helle Eigenfarbe haben, transparent und nicht spröde sind.

Insbesondere ist es erfindungsgemäß vorteilhaft, wenn Verfahrensschritt (iii) unmittelbar nach Verfahrensschritt (ii) erfolgt. Dabei ist der Ausdruck "unmittelbar" so zu verstehen, dass nach der Herstellung des erfindungsgemäßen Diesters und dessen Destillation das aus der Destillation erhaltene Produkt in das Schmelzeumesterungsverfahren gegeben wird. Dadurch muss das Produkt gegebenenfalls nur teilweise kondensiert werden oder ihm die Wärmeenergie nur teilweise entzogen werden, da im Schmelzeumesterungsverfahren ein aufgeschmolzenes Produkt benötigt wird. Die Wärmeenergie muss somit nicht doppelt aufgebracht werden. Ebenso ist es möglich, die bei der Kondensation des destillierten Produktes angefallene Wärme dem Schmelzeumesterungsverfahren über geeignete Mittel zuzuführen, um somit ein wirtschaftliches und umweltfreundliches Verfahren auszulegen.

Die mindestens eine Dihydroxyverbindung in Verfahrensschritt (iii) wird bevorzugt ausgewählt aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, Tricyclodecandimethanol, 3,9-bis(1,1-Dimethyl-2-hydroxyethyl)-2,4,8,10-tetraoxaspiro[5.5]undecane, 2,2-bis(4-Hydroxycyclohexyl)propan, Tetrahydro-2,5-furandimethanol, Bisphenol A, 1,1-Bis-(4-hydroxyphenyl)-3,3,5-trimethylcyclohexan, 4,4'-Dihydroxybiphenyl (DOD), 4,4`-Dihydroxybiphenylether (DOD-Ether), Bisphenol B, Bisphenol M, den Bisphenolen (V) bis (VII) 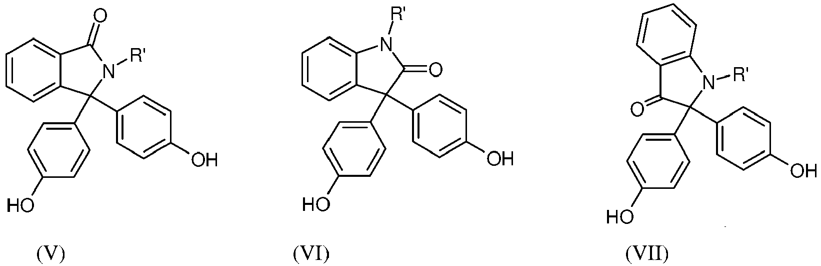
wobei in den Formeln (V) bis (VII) R' jeweils für C₁-C₄-Alkyl, Aralkyl oder Aryl, bevorzugt für Methyl oder Phenyl, ganz besonders bevorzugt für Methyl, steht,
sowie Butandiol, Ethylenglykol, Hexandiol und 1,4:3,6-Dianhydrohexitolen wie Isomannid, Isoidid und Isosorbid. Diese sind auch bekannt als 1,4:3,6-Dianhydro-D-glycidol, 1,4:3,6-Dianhydro-L-iditol und 1,4:3,6-Dianhydro-D-mannitol. Besonders bevorzugt sind dabei aliphatische Dihydroxyverbindungen. Dabei kann in einer Ausführungsform zusätzlich zu der oder den aliphatischen Dihydroxyverbindungen eine aromatische Dihydroxyverbindung im molaren Unterschuss verwendet werden.

Ganz besonders bevorzugt ist die Dihydroxyverbindung ein 1,4:3,6-Dianhydrohexitolen wie Isomannid, Isoidid und Isosorbid und davon am bevorzugsten Isosorbid. Es können auch beliebige Mischungen eingesetzt werden. Ebenso bevorzugt ist die Dihydroxyverbindung eine Mischung aus 1,4:3,6-Dianhydrohexitolen wie Isomannid, Isoidid und Isosorbid und mindestens einem aus der Gruppe aus 1,2-Cyclohexandimethanol, 1,3-Cyclohexandimethanol und/oder 1,4-Cyclohexandimethanol. Dabei ist es insbesondere bevorzugt, dass das 1,2-Cyclohexandimethanol, 1,3-Cyclohexandimethanol und/oder 1,4-Cyclohexandimethanol in Mengen bis zu 20 %, bevorzugt 1 bis 10 %, bezogen auf die gesamte Masse der Dihydroxyverbindungen eingesetzt wird.

Ebenso ist es bevorzugt, dass als Diarylcarbonat in Verfahrensschritt (iii) eine Verbindung der Formel (III) eingesetzt wird 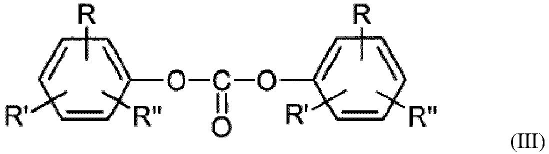 wobei R, R' und R" jeweils unabhängig voneinander gleich oder verschieden sein können und für Wasserstoff, gegebenenfalls verzweigtes C1-C34Alkyl, C7-C34-Alkylaryl oder C6-C34-Aryl stehen, R weiterhin auch -COO-R‴ bedeuten kann, wobei R‴ für gegebenenfalls verzweigtes C1-C34-Alkyl, C7-C34-Alkylaryl oder C6-C34-Aryl steht. Hier gelten ebenso die bereits oben zu Formel (III) beschriebenen Bevorzugungen. Dabei hat es sich als vorteilhaft herausgestellt, den erfindungsgemäßen cycloaliphatischen Diester mit dem Carbonat - beispielsweise DPC - herzustellen, mit dem man auch in Verfahrensschritt (b) das Polymer herstellt. In Verfahrensschritt (b) stören dann geringe Spuren des beispielhaften DPCs, da dieses dann in Verfahrensschritt (b) ohnehin zugesetzt wird. Damit ist diese Herstellmethode mit DPC sehr vorteilhaft. Andernfalls müssen alle Reagenzien und Nebenprodukte vor der Polymerisation sehr genau entfernt werden.

Die als zweiter Katalysator in Verfahrensschritt (iii) eingesetzte tertiäre Stickstoffbase ist bevorzugt ausgewählt aus von Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en, Hexamethylphosphorimidtriamid, 1,2 Dimethyl-1,4,5,6-tretrahydropyridin, 7-Methyl-1,5,7-triazabicyclodec-5-en, 1,8-Diazabicyclo[5.4.0]undec-7-en (DBU), DBN, Ethylimidazol, N,N-Di-isopropyl ethylamin (Hünigs Base), Pyridin, TMG sowie Mischungen dieser Substanzen. Weiter bevorzugt wird der zweite Katalysator ausgewählt aus Guanidin abgeleiteten Basen, 4-Dimethylaminopyridin (DMAP), 1,8-Diazabicyclo[5.4.0]undec-7-en, 1,5-Diazabicyclo[4.3.0]non-5-en, 1,5,7-Triazabicyclo[4.4.0]dec-5-en sowie Mischungen dieser Substanzen. Besonders bevorzugt wird 4-Dimethylaminopyridin eingesetzt.

Es hat sich als vorteilhaft herausgestellt, dass die erfindungsgemäße tertiäre Stickstoffbase, insbesondere DMAP über Vakuum aus dem System entfernt werden kann. Somit kann dieser Katalysator effektiv und einfach aus dem System entfernt werden
Bevorzugt wird der im Verfahrenschritt (iii) eingesetzte zweite Katalysator in einer Menge von 0,005 bis 0,02 Gew.-%, bezogen auf alle im Verfahrensschritt (iii) eingesetzten Komponenten, verwendet.

Bei den in Verfahrensschritt (iii) enthaltenen Alkalimetallkationen handelt es sich bevorzugt um Lithiumkationen, Kaliumkationen, Natriumkationen, Cäsiumkationen und Mischungen daraus.

Der im Verfahrensschritt (iii) eingesetzte dritte Katalysator ist das organische oder anorganische Alkali- oder Erdalkalisalz einer schwachen Säure (pKs zwischen 3 und 7 bei 25 °C). Geeignete schwache Säuren sind z.B. Carbonsäuren, bevorzugt C2- C22 Carbonsäuren, wie Essigsäure, Proprionsäure, Ölsäure, Stearinsäure, Laurinsäure, Benzoesäure, 4-Methoxybenzoesäure, 3-Methylbenzoesäure, 4-tert.-Butylbenzoesäure, p-Toluolessigsäure, 4-Hydroxybenzoesäure, Salicylsäure, Teilester von Polycarbonsäuren, wie z.B. Monoester von Bernsteinsäure , verzweigte aliphatische Carbonsäuren, wie 2,2-Dimethylpropansäure, 2,2-Dimethylpropansäure, 2,2- Dimethylbutansäure, 2-Ethylhexansäure.

Geeignete organische und anorganische Salze sind oder sind abgeleitet von Natriumhydrogencarbonat, Kaliumhydrogencarbonat, Lithiumhydrogencarbonat, Natriumcarbonat, Lithiumcarbonat, Kaliumcarbonat, Natriumacetat, Kaliumacetat, Lithiumacetat, Natriumstearat, Kaliumstearat, Lithiumstearat, Natriumoleat, Lithiumoleat, Kaliumoleat, Natriumbenzoat, Kaliumbenzoat, Lithiumbenzoat, Dinatrium-, Dikalium-, und Dilithiumsalze von BPA. Ferner können Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat und entsprechende Oleate eingesetzt werden. Weiterhin können entsprechende Salze von Phenolen, insbesondere von Phenol eingesetzt werden. Diese Salze können einzeln oder im Gemisch eingesetzt werden.

Der im Verfahrensschritt (iii) eingesetzte dritte Katalysator ist bevorzugt ausgewählt aus der Gruppe bestehend aus Natriumhydroxid, Lithiumhydroxid, Natriumphenolat, Lithiumphenolat, Natriumbenzoat, Lithiumbenzoat und Cäsiumcarbonat sowie Mischungen dieser Substanzen. Besonders bevorzugt wird Natriumphenolat oder Lithiumphenolat eingesetzt. Dabei ist es ebenso bevorzugt, dass das Natriumphenolat als Trihydrat verwendet wird.

Der im Verfahrensschritt (iii) eingesetzte dritte Katalysator ist des Weiteren bevorzugt ausgewählt aus der Gruppe bestehend aus Natriumhydroxid, Natriumphenolat, Natriumbenzoat und Cäsiumcarbonat sowie Mischungen dieser Substanzen. Besonders bevorzugt wird Natriumphenolat eingesetzt. Dabei ist es ebenso bevorzugt, dass das Natriumphenolat als Trihydrat verwendet wird.

In einem weiteren Aspekt der Erfindung wird ein Polyestercarbonat bereitgestellt, welches erhalten wird nach dem erfindungsgemäßen Verfahren zur Herstellung eines Polyestercarbonats mittels Schmelzeumesterungsverfahren in sämtlichen oben beschriebenen Ausgestaltungen und Bevorzugungen.

Das erfindungsgemäße Polyestercarbonat kann als solches zu Formkörpern aller Art verarbeitet werden. Es kann auch mit anderen Thermoplasten und/oder Polymeradditiven zu thermoplastischen Formmassen verarbeitet werden. Die Formmassen und Formkörper sind weitere Gegenstände der vorliegenden Erfindung.

Die Polymeradditive werden bevorzugt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Farbstoffen und Pigmenten, Schlagzähigkeitsmodifikatoren sowie Füll- und Verstärkungsstoffen.

Die thermoplastischen Formmassen können beispielsweise hergestellt werden, indem man das Polyestercarbonat und die weiteren Bestandteile in bekannter Weise vermischt und bei Temperaturen von bevorzugt 200°C bis 320°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Formkörper aus dem erfindungsgemäßen Polyestercarbonat oder den das Polyestercarbonat enthaltenden thermoplastischen Formmassen können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

### Beispiele:

### Verwendete Materialien:

1,4-Cyclohexandicarbonsäure: CAS 1076-97-7; Reinheit 99 %; Tokyo Chemical Industries, Japan
Diphenylcarbonat: Reinheit ≥ 99,5 %; CAS 102-09-0; Covestro NV, Antwerpen, Belgien
Natriumphenolat-trihydrat: Reinheit 98 %; CAS 652-67-5; Merck, Darmstadt Deutschland
Isosorbid: CAS 652-67-5; Polysorb PSA; Roquette Frères, Frankreich
4-Dimethylaminopyridin: Reinheit ≥98,0 %; CAS 1122-58-3; Sigma-Aldrich, München Deutschland
Cäsiumcarbonat: Reinheit ≥99,0 %; CAS 534-17-8 Sigma-Aldrich, München Deutschland

### Analytische Methoden:

Bestimmung der Lösungsviskosität: Die relative Lösungsviskosität (rel; auch als eta rel bezeichnet) wurde für eine Lösung enthaltend 1 Gewichtsprozent Polyestercarbonat in Dichlormethan gegenüber Dichlormethan bei 25°C mit einem Ubbelohdeviskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Visuelle Prüfung: Die Beurteilung der Farbe und der Transparenz des Polyestercarbonats erfolgte visuell.

Reinheit des 1,4-Cyclohexandicarbonsäurediphenylesters: Die Ermittlung der Reinheit des 1,4-Cyclohexandicarbonsäurediphenylesters erfolgte mittels Gaschromatographie mit Flammenionisationsdetektor (GC-FID).

### Beispiel 1a - Herstellung des 1,4-Cyclohexandicarbonsäurediphenylesters und Abtrennung, Verfahrensschritte (i) und (ii)

In einem 6 Literkolben mit Destillationsbrücke, Destillatsammelkolben und Vakuumpumpe mit Kühlfalle wurden 3156,28 g Diphenylcarbonat, 1208,04 g 1,4-Cyclohexandicarbonsäure und 2,619 g Natriumphenolat-trihydrat vorgelegt und bei 180°C unter Rühren erwärmt. Der Druck wurde auf Normaldruck belassen. Bei 180°C wurde die initiale CO₂ Bildung beobachtet. Das CO₂ wurde kontinuierlich aus dem Kolben entzogen, während das Reaktionsgemisch innerhalb von 15 Minuten auf 200°C sowie innerhalb weiterer 45 Minuten auf 210°C erhitzt wurde. Das Reaktionsgemisch wurde für weitere 135 Minuten bei 210°C belassen. Anschließend wurde mittels der Vakuumdestillation Phenol aus dem Reaktionsgemisch entfernt. Während einer Dauer von 60 Minuten wurde bei einer Kopftemperatur von 170°C der Druck von 700mbar auf 12mbar gesenkt, wodurch eine konstante Entfernung des Phenols aus dem Reaktionsgemisch gewährleistet war.

Nach der Vakuumdestillation verblieben 2285 g Reaktionsprodukt im Kolben. Nach dem Abkühlen wurde das Reaktionsprodukt in Toluol (2 g Toluol auf 1 g Reaktionsprodukt) bei 80°C gelöst und das Reaktionsprodukt durch Abkühlen umkristallisiert. Nach dem Trocknen im Vakuumofen wurden 1332 g 1,4-Cyclohexandicarbonsäurediphenylester als weißes Pulver erhalten. Die GC-FID Analyse ergab eine Reinheit von 99,8 % trans - 1,4-Cyclohexandicarbonsäurediphenylester.

Der Toluol mit Neben Komponente wurde bis -18 °C gekühlt, wobei weitere 489 Gramm Produkt kristallisierten und abgetrennt wurden als weiße Feststoff.

### Beispiel 1b: Polymerisation von Isosorbid, Diphenylcarbonat und 1,4-Cyclohexandicarbonsäurediphenylester, Verfahrensschritt (iii)

In einem Dreihalskolben mit Rührwerk (Firma IKA), Ölbad, Kurzwegabscheider, Vakuumanschluss und Kühlfalle wurden 59,96 g Isosorbid, 51,73 g Diphenylcarbonat und 57,04 g 1,4-Cyclohexandicarbonsäurediphenylester erhalten aus Verfahrensschritt 1a vorgelegt.

Es wurden Lösungen der entsprechenden Katalysatoren in Phenol zu der Vorlage hinzugegeben. Die Katalysatorlösungen bestanden jeweils aus 5 Gew.-% Katalysator und 95 Gew.-% Phenol.

N,N,-Dimethylaminopyridin wurde in einem Absolutgehalt von 0.0090 g zu den Edukten in der Vorlage zugegeben. Dies entspricht 53,3 ppm (Gewicht) Katalysator bezogen auf die eingesetzten Edukte bzw. 6,1 ppm (Gewicht) Stickstoff bezogen auf die eingesetzten Edukte.

Natriumphenolat-trihydrat wurde in einem Absolutgehalt von 0.0225 g zu den Edukten in der Vorlage zugegeben. Dies entspricht 133,3 ppm Gewicht bezogen auf die eingesetzten Edukte bzw. 18,0 ppm Gewicht Alkalimetall bezogen auf die eingesetzten Edukte.

Das Reaktionsgemisch wurde durch 3-faches Evakuieren und Belüften mit Stickstoff von Sauerstoff befreit und danach bei 170 °C und Normaldruck geschmolzen bis eine homogene Schmelze vorlag. Danach wurde die Temperatur des Reaktionsgemischs auf 180°C erhöht, der Druck vorsichtig auf 200 mbar abgesenkt und das Reaktionsgemisch für 20 Minuten bei diesen Parametern gehalten. Anschließend wurde die Temperatur des Reaktionsgemischs auf 220°C erhöht, der Druck auf 50 mbar abgesenkt sowie die Rührgeschwindigkeit des Rührwerks reduziert. Nach weiteren 20 Minuten Haltezeit wurde der Druck auf 25 mbar abgesenkt sowie die Rührgeschwindigkeit des Rührwerks weiter reduziert. Nach weiteren 15 Minuten Haltezeit wurde die Temperatur des Reaktionsgemischs auf 230°C erhöht und der Druck bis auf 0,59 mbar abgesenkt. Nach weiteren 5 Minuten Haltezeit wurde die Temperatur des Reaktionsgemischs auf 240°C erhöht und wiederum für 10 Minuten gehalten. Danach wurde das Vakuum durch Zuleiten von Stickstoff unterbrochen und eine Produktprobe aus dem Kolben entnommen.

Es resultierte ein transparentes Produkt. Die visuelle Prüfung ergab einen leichten Gelbstich. Die relative Lösungsviskosität belief sich auf 1,22.

Die Polymerisation von Isosorbid, Diphenylcarbonat und 1,4-Cyclohexandicarbonsäurediphenylester in den nachfolgenden Beispielen 2b bis 13b erfolgte analog des Beispiels 1b. In diesen Versuchen wurden die Anzahl der Katalysatoren sowie deren Gewichtsanteil in ppm bezogen auf die Menge eingesetzter Edukte in diesem Verfahrensschritt (iii) variiert. Details sind der nachfolgenden Tabelle 1 zu entnehmen. Angegeben ist jeweils der Gewichtsanteil in ppm.

**Tabelle 1: Variation der Katalysatoren in Verfahrensschritt (iii)**

| **Versuch Nr.** | | **Cs₂CO₃ [ppm]** | **DMAP [ppm]** | **NaOPh.3H2O [ppm]** | **Alkalimetall [ppm]** | **Eta rel** | **Beobachtungen** |
|---|---|---|---|---|---|---|---|
| 2b | n. erfg. | 0 | 53,3 | 26,7 | 3,6 | 1,16 | helles und transparentes Produkt, spröde |
| 3b | n. erfg. | 0 | 53,3 | 53,3 | 7,2 | 1,16 | helles und transparentes Produkt, spröde |
| 4b | erfg. | 0 | 53,3 | 80,0 | 10,8 | 1,21 | helles und transparentes Produkt, nicht spröde |
| 5b | erfg. | 0 | 53,3 | 106,6 | 14,4 | 1,22 | helles und transparentes Produkt, nicht spröde |
| 1b | erfg. | 0 | 53,3 | 133,3 | 18,0 | 1,22 | helles und transparentes Produkt, nicht spröde |
| 6b | erfg. | 0 | 53,3 | 186,6 | 25,2 | 1,20 | helles und transparentes Produkt, nicht spröde |
| 7b | n. erfg. | 0 | 53,3 | 266,6 | 36,0 | 1,36 | Opakes und braun gefärbtes Produkt |
| 8b | n. erfg. | 0 | 0 | 133,3 | 18,0 | - | keine Polymerisation |
| 9b | n. erfg. | 2,0 | 0 | 0 | 1,6 | - | keine Polymerisation |
| 10b | n. erfg. | 133,3 | 0 | 0 | 108,7 | - | keine Polymerisation |
| 11b | n. erfg. | 667 | 0 | 0 | 544,1 | - | unlösliches, sprödes und schwarz gefärbtes Produkt |
| 12b | n. erfg. | 0 | 0 | 667 | 90,1 | - | unlösliches, sprödes und schwarz gefärbtes Produkt |
| 13b | n. erfg. | 0 | 667 | 0 | 0 | 1,05 | transparentes und sehr sprödes Produkt |

| | | | | | | | |
|---|---|---|---|---|---|---|---|
| erfg. - erfindungsgemäßes Beispiel n. erfg. - nicht erfindungsgemäßes Beispiel | | | | | | | |

Die Daten in Tabelle 1 zeigen, dass nur mit dem beanspruchten Verfahren die der Erfindung zugrunde liegende Aufgabe gelöst wird. Ist die Menge an Alkalimetall in Verfahrensschritt (iii) zu klein (Beispiele 2b und 3b), so findet ein nur unzureichender Polymeraufbau statt. Ist die Menge zu groß (Beispiel 7b), so entsteht ein Polyestercarbonat von nicht ausreichender Qualität.

Wird nur ein Katalysator eingesetzt, so findet keine Polymerisation zum Polyestercarbonat statt oder es wird ein Produkt von schlechter Qualität erhalten (Beispiele 8b bis 13b). Dabei kann auch nicht durch Variation der Menge dieses einen Katalysators ein Polyestercarbonat mit guten Eigenschaften erhalten werden.

## Patentansprüche

1. Verfahren zur Herstellung eines Polyestercarbonats umfassend die Schritte:
(i) Reaktion eines Gemisches, umfassend mindestens eine lineare aliphatische Dicarbonsäure und/oder mindestens eine cycloaliphatische Dicarbonsäure und mindestens ein aliphatisches und/oder aromatisches Carbonat, in Anwesenheit mindestens eines ersten Katalysators, der basisch wirkt, zu einem aliphatischen Diester der Formel (1) 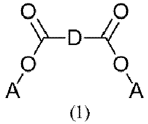 worin
A jeweils unabhängig voneinander für einen aliphatischen oder aromatischen Rest steht,
D für R₃ steht oder für eine der Formeln (1a) oder (1b),
wobei R₃ für eine lineare Alkylen-Gruppe mit 3 bis 16 Kohlenstoffatomen steht und diese Alkylen-Gruppe gegebenenfalls einfach oder mehrfach substituiert sein kann oder 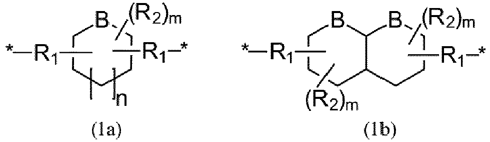
worin
B jeweils unabhängig voneinander für eine CH₂-Gruppe, für O oder für S steht,
R₁ jeweils unabhängig voneinander für eine Einfachbindung oder eine Alkylen-Gruppe mit 1 bis 10 Kohlenstoffatomen steht und
R₂ jeweils unabhängig voneinander für eine Alkylen-Gruppe mit 1 bis 10 Kohlenstoffatomen steht,
n eine Zahl zwischen 0 und 3 ist,
m eine Zahl zwischen 0 und 6 ist und die "^{∗}" die Positionen angeben, an denen die -(C=O)OA-Gruppen der Formel (1) vorhanden sind.
(ii) Abtrennung des aliphatischen Diesters der Formel (1) vom Gemisch des Verfahrensschritts (i),
(iii) Reaktion des abgetrennten aliphatischen Diesters der Formel (1), mindestens einer Dihydroxy-Verbindung und mindestens eines Diarylcarbonats in einem Schmelzeumesterungsverfahren in Anwesenheit einer Mischung enthaltend einen zweiten Katalysator und einen dritten Katalysator,
wobei der zweite Katalysator eine tertiäre Stickstoffbase ist,
wobei der dritte Katalysator ein basisch wirkendes Alkalimetallsalz ist
und wobei der Anteil der Alkalimetallkationen in Verfahrensschritt (iii) 0,0010 bis 0,0030 Gew.-%, bezogen auf alle im Verfahrensschritt (iii) eingesetzten Komponenten, beträgt.

2. Verfahren nach Anspruch 1, **dadurch gekennzeichnet, dass** in den Formeln (Ia) und (Ib) B für eine CH₂-Gruppe steht.

3. Verfahren gemäß Anspruch 2, **dadurch gekennzeichnet, dass** die cycloaliphatische Dicarbonsäure ausgewählt ist aus der Gruppe bestehend aus 1,4-Cyclohexandicarbonsäure, 1,3-Cyclohexandicarbonsäure, 1,2-Cyclohexandicarbonsäure und hydrierter Dimerfettsäure sowie Mischungen aus diesen aliphatischen Dicarbonsäuren.

4. Verfahren nach einem der vorhergehenden Ansprüche, **dadurch gekennzeichnet, dass** in Verfahrensschritt (i) ein aromatisches Carbonat der Formel (III) eingesetzt wird 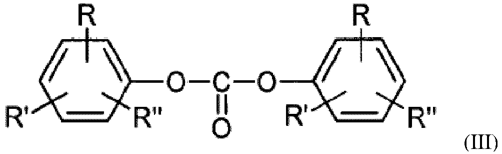 wobei R, R' und R" jeweils unabhängig voneinander gleich oder verschieden sein können und für Wasserstoff, gegebenenfalls verzweigtes C1-C34Alkyl, C7-C34-Alkylaryl oder C6-C34-Aryl stehen, R weiterhin auch -COO-R‴ bedeuten kann, wobei R‴ für gegebenenfalls verzweigtes C1-C34-Alkyl, C7-C34-Alkylaryl oder C6-C34-Aryl steht.

5. Verfahren nach einem der vorhergehenden Ansprüche, **dadurch gekennzeichnet, dass** der im Verfahrensschritt (i) eingesetzte erste Katalysator ausgewählt ist aus der Gruppe bestehend aus Cäsiumcarbonat, Natriumphenolat und 4-Dimethylaminpyridin sowie Mischungen dieser Substanzen.

6. Verfahren nach einem der vorhergehenden Ansprüche, **dadurch gekennzeichnet, dass** der im Verfahrensschritt (i) eingesetzte erste Katalysator in einer Menge von 0,005 bis 0,2 Gew.-% eingesetzt wird, bezogen auf alle im Verfahrensschritt (i) eingesetzten Komponenten.

7. Verfahren nach einer der vorhergehenden Ansprüche, **dadurch gekennzeichnet, dass** der in Verfahrensschritt (iii) verwendete zweite Katalysator wird in einer Menge von 0,005 bis 0,02 Gew.-%, bezogen auf alle im Verfahrensschritt (iii) eingesetzten Komponenten, eingesetzt wird.

8. Verfahren nach einer der vorhergehenden Ansprüche, **dadurch gekennzeichnet, dass** der in Verfahrensschritt (iii) eingesetzte zweite Katalysator ausgewählt ist aus der Gruppe bestehend aus von Guanidin abgeleiteten Basen, 4-Dimethylaminopyridin, 1,8-Diazabicyclo[5.4.0]undec-7-en und 1,5-Diazabicyclo[4.3.0]non-5-en sowie Mischungen dieser Substanzen.

9. Verfahren nach einem der vorhergehenden Ansprüche, **dadurch gekennzeichnet, dass** die Alkalimetallkationen in Verfahrensschritt (iii) ausgewählt sind aus Natriumkationen, Lithiumionen, Cäsiumkationen und Mischungen daraus.

10. Verfahren nach Anspruch 9, **dadurch gekennzeichnet, dass** in der Verfahrensschritt (iii) eingesetzte der dritte Katalysator ausgewählt ist aus der Gruppe bestehend aus Natriumhydroxid, Lithiumhydroxid, Natriumphenolat, Lithiumphenolat, Natriumbenzoat; Lithiumbenzoat und Cäsiumcarbonat sowie Mischungen dieser Substanzen.

11. Verfahren nach einem der vorhergehenden Ansprüche, **dadurch gekennzeichnet, dass** die Dihydroxyverbindung in Verfahrenschritt (iii) ausgewählt ist aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, Tricyclodecandimethanol, 3,9-bis(1,1-Dimethyl-2-hydroxyethyl)-2,4,8,10-tetraoxaspiro[5.5]undecane, 2,2-bis(4-Hydroxycyclohexyl)propan, Tetrahydro-2,5-furandimethanol, Bisphenol A, 1,1-Bis-(4-hydroxyphenyl)-3,3,5-trimethylcyclohexan, 4,4'-Dihydroxybiphenyl (DOD), 4,4'-Dihydroxybiphenylether (DOD-Ether), Bisphenol B, Bisphenol M, den Bisphenolen (V) bis (VII) 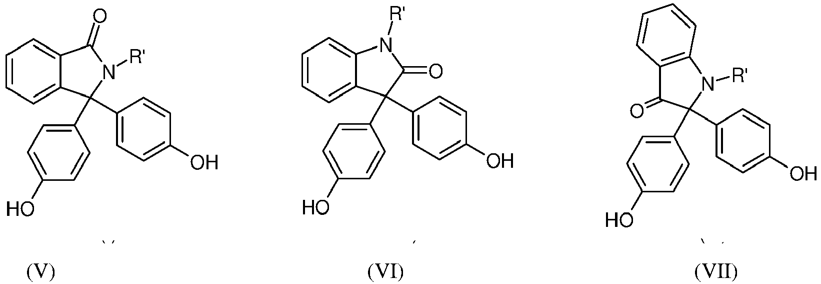
wobei in den Formeln (V) bis (VII) R' jeweils für C₁-C₄-Alkyl, Aralkyl oder Aryl, bevorzugt für Methyl oder Phenyl, ganz besonders bevorzugt für Methyl, steht,
sowie Butandiol, Ethylenglykol, Hexandiol und 1,4:3,6-Dianhydrohexitolen wie Isomannid, Isoidid und Isosorbid.

12. Verfahren gemäß Anspruch 11, **dadurch gekennzeichnet, dass** die Dihydroxyverbindung in Verfahrensschritt (iii) ausgewählt ist aus der Gruppe bestehend aus Isomannid, Isoidid und Isosorbid sowie Mischungen dieser Substanzen.

13. Polyestercarbonat, erhältlich nach dem Verfahren gemäß einem der Ansprüche 1 bis 12.

14. Formmasse enthaltend ein Polyestercarbonat gemäß Anspruch 13.

15. Formkörper enthaltend ein Polyestercarbonat gemäß Anspruch 13.

## Claims

1. Process for preparing a polyester carbonate comprising the steps of:
(i) reacting a mixture comprising at least one linear aliphatic dicarboxylic acid and/or at least one cycloaliphatic dicarboxylic acid and at least one aliphatic and/or aromatic carbonate, in the presence of at least one first catalyst that is basic, to form an aliphatic diester of formula (1) 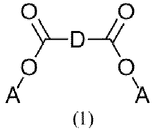 in which
A in each case independently represents an aliphatic or aromatic radical,
D represents R₃ or one of formulas (1a) or (1b),
where R₃ represents a linear alkylene group having 3 to 16 carbon atoms and this alkylene group may optionally be mono- or polysubstituted or 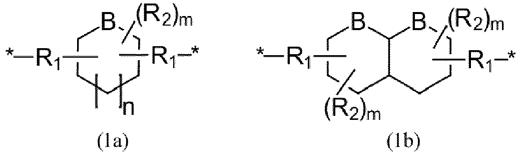
in which
B in each case independently represents a CH₂ group, O or S,
R₁ in each case independently represents a single bond or an alkylene group having 1 to 10 carbon atoms and R₂ in each case independently represents an alkylene group having 1 to 10 carbon atoms,
n is a number between 0 and 3,
m is a number between 0 and 6 and "*" indicate the positions at which the
-(C=O)OA groups in formula (1) are present,
(ii) separating the aliphatic diester of formula (1) from the mixture from process step (i),
(iii) reacting the separated aliphatic diester of formula (1), at least one dihydroxy compound, and at least one diaryl carbonate in a melt transesterification process in the presence of a mixture comprising a second catalyst and a third catalyst,
wherein the second catalyst is a tertiary nitrogen base,
wherein the third catalyst is a basic alkali metal salt,
and wherein the proportion of alkali metal cations in process step (iii) is 0.0010% to 0.0030% by weight based on all components used in process step (iii).

2. Process according to Claim 1, **characterized in that** B in formulas (Ia) and (Ib) represents a CH₂ group.

3. Process according to Claim 2, **characterized in that** the cycloaliphatic dicarboxylic acid is selected from the group consisting of cyclohexane-1,4-dicarboxylic acid, cyclohexane-1,3-dicarboxylic acid, cyclohexane-1,2-dicarboxylic acid, and hydrogenated dimer fatty acid and mixtures of these aliphatic dicarboxylic acids.

4. Process according to any of the preceding claims, **characterized in that**, in process step (i), an aromatic carbonate of formula (III) is used 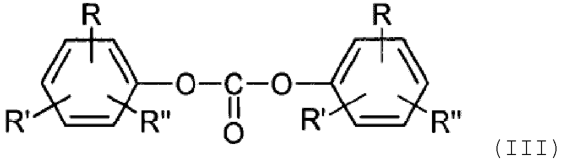 where R, R', and R" may each independently be identical or different and represent hydrogen, optionally branched C1-C34 alkyl, C7-C34 alkylaryl or C6-C34 aryl; in addition R may also denote -COO-R‴, where R‴ represents optionally branched C1-C34 alkyl, C7-C34 alkylaryl or C6-C34 aryl.

5. Process according to any of the preceding claims, **characterized in that** the first catalyst used in process step (i) is selected from the group consisting of cesium carbonate, sodium phenoxide, and 4-dimethylamine pyridine and mixtures of these substances.

6. Process according to any of the preceding claims, **characterized in that** the first catalyst used in process step (i) is used in an amount of from 0.005% to 0.2% by weight based on all of the components used in process step (i).

7. Process according to any of the preceding claims, **characterized in that** the second catalyst used in process step (iii) is used in an amount of from 0.005% to 0.02% by weight based on all components used in process step (iii).

8. Process according to any of the preceding claims, **characterized in that** the second catalyst used in process step (iii) is selected from the group consisting of bases derived from guanidine, 4-dimethylaminopyridine, 1,8-diazabicyclo[5.4.0]undec-7-ene, and 1,5-diazabicyclo[4.3.0]non-5-ene and mixtures of these substances.

9. Process according to any of the preceding claims, **characterized in that** the alkali metal cations in process step (iii) are selected from sodium cations, lithium ions, cesium cations, and mixtures thereof.

10. Process according to Claim 9, **characterized in that** the third catalyst used in process step (iii) is selected from the group consisting of sodium hydroxide, lithium hydroxide, sodium phenoxide, lithium phenoxide, sodium benzoate, lithium benzoate, and cesium carbonate and mixtures of these substances.

11. Process according to any of the preceding claims, **characterized in that** the dihydroxy compound in process step (iii) is selected from the group consisting of cyclohexane-1,2-diol, cyclohexane-1,3-diol, cyclohexane-1,4-diol, cyclohexane-1,2-dimethanol, cyclohexane-1,3-dimethanol, cyclohexane-1,4-dimethanol, tricyclodecanedimethanol, 3,9-bis(1,1-dimethyl-2-hydroxyethyl)-2,4,8,10-tetraoxaspiro[5.5]undecane, 2,2-bis(4-hydroxycyclohexyl)propane, tetrahydrofuran-2,5-dimethanol, bisphenol A, 1,1-bis(4-hydroxyphenyl)-3,3,5-trimethylcyclohexane, 4,4'-dihydroxybiphenyl (DOD), 4,4'-dihydroxydiphenyl ether (DOD ether), bisphenol B, bisphenol M, the bisphenols (V) to (VII) 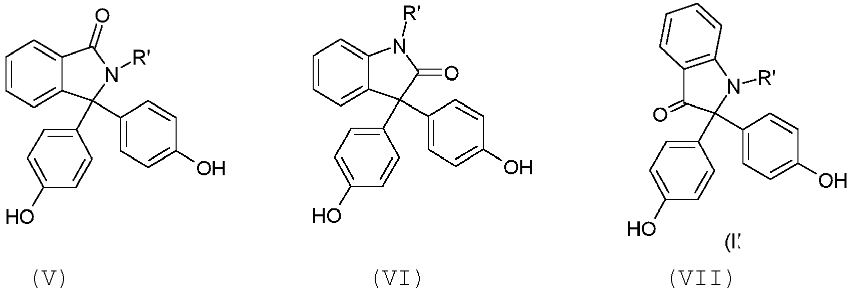 where in formulas (V) to (VII) R' in each case represents C₁-C₄ alkyl, aralkyl or aryl, preferably methyl or phenyl, very particularly preferably methyl, and also butanediol, ethylene glycol, hexanediol and 1,4:3,6-dianhydrohexitols such as isomannide, isoidide, and isosorbide.

12. Process according to Claim 11, **characterized in that** the dihydroxy compound in process step (iii) is selected from the group consisting of isomannide, isoidide, and isosorbide and mixtures of these substances.

13. Polyester carbonate obtainable by the process according to any of Claims 1 to 12.

14. Moulding compound comprising a polyester carbonate according to Claim 13.

15. Moulding comprising a polyester carbonate according to Claim 13.

## Revendications

1. Procédé de préparation d'un polyestercarbonate comprenant les étapes :
(i) réaction d'un mélange comprenant au moins un acide dicarboxylique aliphatique linéaire et/ou au moins un acide dicarboxylique cycloaliphatique et au moins un carbonate aliphatique et/ou aromatique, en présence d'au moins un premier catalyseur, qui a un effet basique, pour donner un diester aliphatique de formule (I) 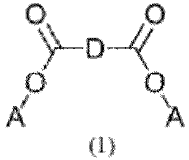 dans laquelle
A représente à chaque fois indépendamment l'un de l'autre un radical aliphatique ou aromatique,
D représente R₃ ou représente l'une des formules (1a) ou (1b),
R₃ représentant un groupe alkylène linéaire comportant 3 à 16 atomes de carbone et ce groupe alkylène pouvant être éventuellement substitué une ou plusieurs fois 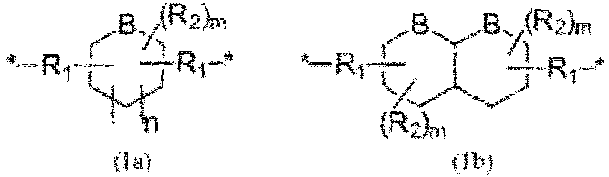
dans lesquelles
B à chaque fois indépendamment les uns des autres représente un groupe CH₂, O ou S,
R₁ représente à chaque fois indépendamment les uns des autres une simple liaison ou un groupe alkylène comportant 1 à 10 atomes de carbone et
R₂ représente à chaque fois indépendamment les uns des autres un groupe alkylène comportant 1 à 10 atomes de carbone,
n est un nombre entre 0 et 3,
m est un nombre entre 0 et 6 et les « * » indiquent les positions au niveau desquelles les groupes -(C=O)OA de la formule (1) sont présents,
(ii) séparation du diester aliphatique de formule (1) du mélange de l'étape (i) de procédé,
(iii) réaction du diester aliphatique de formule (1) séparé, d'au moins un composé dihydroxylé et d'au moins un carbonate de diaryle dans un procédé de transestérification en fusion en présence d'un mélange contenant un deuxième catalyseur et un troisième catalyseur,
le deuxième catalyseur étant une base azotée tertiaire,
le troisième catalyseur étant un sel de métal alcalin à effet basique
et la proportion des cations de métal alcalin dans l'étape de procédé (iii) étant de 0,0010 à 0,0030 % en poids, par rapport à tous les composants utilisés dans l'étape de procédé (iii).

2. Procédé selon la revendication 1, **caractérisé en ce que** dans les formules (Ia) et (Ib), B représente un groupe CH₂.

3. Procédé selon la revendication 2, **caractérisé en ce que** l'acide dicarboxylique cycloaliphatique est choisi dans le groupe constitué par l'acide 1,4-cyclohexanedicarboxylique, l'acide 1,3-cyclohexanedicarboxylique, l'acide 1,2-cyclohexanedicarboxylique, et des acides gras dimériques hydrogénés ainsi que des mélanges de ces acides dicarboxyliques aliphatiques.

4. Procédé selon l'une quelconque des revendications précédentes, **caractérisé en ce que** dans l'étape de procédé (i) un carbonate aromatique de formule (III) est utilisé 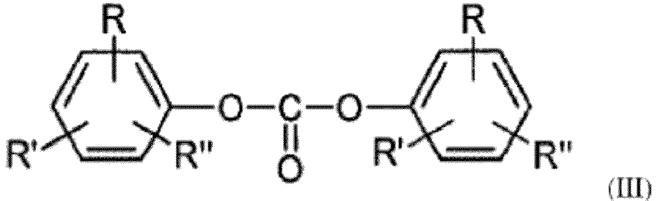 R, R' et R" pouvant être à chaque fois indépendamment les uns des autres identiques ou différents et représentant hydrogène, alkyle en C1-C34, alkylaryle en C7-C34 ou aryle en C6-C34 éventuellement ramifié, R pouvant en outre signifier également -COO-R‴, R‴ représentant alkyle en C1-C34, alkylaryle en C7-C34 ou aryle en C6-C34 éventuellement ramifié.

5. Procédé selon l'une quelconque des revendications précédentes, **caractérisé en ce que** le premier catalyseur utilisé dans l'étape de procédé (i) est choisi dans le groupe constitué par le carbonate de césium, le phénolate de sodium et la 4-diméthylaminopyridine ainsi que des mélanges de ces substances.

6. Procédé selon l'une quelconque des revendications précédentes, **caractérisé en ce que** le premier catalyseur utilisé dans l'étape de procédé (i) est utilisé en une quantité de 0,005 à 0,2 % en poids, par rapport à tous les composants utilisés dans l'étape de procédé (i).

7. Procédé selon l'une quelconque des revendications précédentes, **caractérisé en ce que** le deuxième catalyseur utilisé dans l'étape de procédé (iii) est utilisé en une quantité de 0,005 à 0,02 % en poids, par rapport à tous les composants utilisés dans l'étape de procédé (iii).

8. Procédé selon l'une quelconque des revendications précédentes, **caractérisé en ce que** le deuxième catalyseur utilisé dans l'étape de procédé (iii) est choisi dans le groupe constitué par des bases issues de la guanidine, la 4-diméthylaminopyridine, le 1,8-diazabicyclo[5.4.0]undéc-7-ène et le 1,5-diazabicyclo[4.3.0]non-5-ène ainsi que des mélanges de ces substances.

9. Procédé selon l'une quelconque des revendications précédentes, **caractérisé en ce que** les cations de métal alcalin dans l'étape de procédé (iii) sont choisis parmi des cations sodium, des ions lithium, des cations césium et des mélanges correspondants.

10. Procédé selon la revendication 9, **caractérisé en ce que** le troisième catalyseur utilisé dans l'étape de procédé (iii) est choisi dans le groupe constitué par l'hydroxyde de sodium, l'hydroxyde de lithium, le phénolate de sodium, le phénolate de lithium, le benzoate de sodium ; le benzoate de lithium et le carbonate de césium ainsi que des mélanges de ces substances.

11. Procédé selon l'une quelconque des revendications précédentes, **caractérisé en ce que** le composé dihydroxylé dans l'étape de procédé (iii) est choisi dans le groupe constitué par 1,2-cyclohexanediol, 1,3-cyclohexanediol, 1,4-cyclohexanediol, 1,2-cyclohexanediméthanol, 1,3-cyclohexanediméthanol, 1,4-cyclohexanediméthanol, tricyclodécanediméthanol, 3,9-bis(1,1-diméthyl-2-hydroxyéthyl)-2,4,8,10-tétraoxaspiro[5.5]undécane, 2,2-bis(4-hydroxycyclohexyl)propane, tétrahydro-2,5-furanediméthanol, bisphénol A, 1,1-bis-(4-hydroxyphényl)-3,3,5-triméthylclohexane, 4,4'-dihydroxybiphényle (DOD), 4,4'-dihydroxybiphényléther (éther de DOD), bisphénol B, bisphénol M, les bisphénols (V) à (VII) 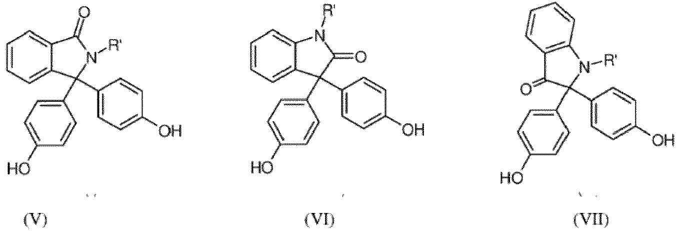
dans les formules (V) à (VII), R' représentant H chaque fois C₁₋₄-alkyle, aralkyle ou aryle, préférablement méthyle ou phényle, tout particulièrement préférablement méthyle,
ainsi que butanediol, éthylèneglycol, hexanediol et des 1,4:3,6-dianhydrohexitols comme isomannide, isoidide et isosorbide.

12. Procédé selon la revendication 11, **caractérisé en ce que** le composé dihydroxylé dans l'étape de procédé (iii) est choisi dans le groupe constitué par isomannide, isoidide et isosorbide ainsi que des mélanges de ces substances.

13. Polyestercarbonate, pouvant être obtenu par le procédé selon l'une quelconque des revendications 1 à 12.

14. Masse à mouler contenant un polyestercarbonate selon la revendication 13.

15. Corps moulé contenant un polyestercarbonate selon la revendication 13.
